# FASCICULE DE BREVET EUROPEEN

(11) **EP 1 760 443 B1**
(45) Date de publication et mention de la délivrance du brevet: **08.12.2010**
(21) Numéro de dépôt: 06300854.4
(22) Date de dépôt: 03.08.2006
(51) Int. Cl.: G01M 1/24

(54) **Procédé d'équilibrage dynamique de vilebrequins**
Verfahren zum dynamischen Auswuchten von Kurbelwellen
Method for dynamic balancing of crankshafts

(30) Priorité: 31.08.2005 FR 0552624
(43) Date de publication de la demande: 07.03.2007
(73) Titulaire: Forges de Courcelles, 52800 Nogent (FR)
(72) Inventeur: Boujon, Philippe, 52000 Chaumont (FR)
(74) Mandataire: Dupuis, François

(56) Documents cités:
- EP-A- 1 134 569
- FR-A- 2 797 314
- US-A- 4 545 341
- US-A- 5 526 779
- US-A1- 2003 230 142
- US-A1- 2004 046 736
- US-A1- 2005 069 188

## Description

L'invention se rattache au secteur technique de la fabrication de vilebrequins pour moteurs thermiques.

Les vilebrequins sont des pièces complexes obtenues en acier forgé ou coulé ou en fonte moulée, ils sont constitués de manetons (1), tourillons (2) et de contrepoids (3) reliés par des bras. Ces pièces sont ensuite usinées au niveau des tourillons et manetons. Sur la périphérie des contrepoids sont percés des trous (3a) destinés à parfaire l'équilibrage dynamique du vilebrequin usiné.

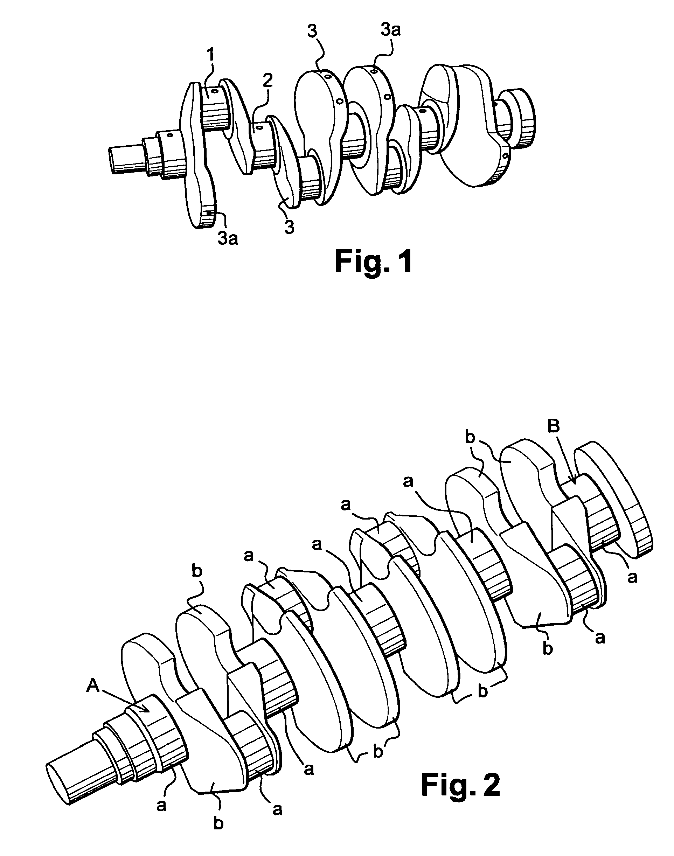

On a ainsi illustré, figure 1, le principe de conception même d'un vilebrequin.

Le problème posé essentiel est le contrôle de l'équilibrage du vilebrequin fabriqué, et ce par rapport à des tolérances pré-établies.

On connait par US 2003 230142 un procédé d'usinage et d'équilibrage d'un vilebrequin en testant l'équilibrage et l'éventuel enlèvement de matière à des fins d'équilibrage avant les opérations de finition.

La déposante, qui est spécialisée dans le domaine de la forge, a aussi une très large expertise dans la fabrication des vilebrequins et des contraintes techniques de contrôle d'équilibrage précité. Actuellement, les vilebrequins forgés sont livrés à l'état brut, le client traite toutes les opérations jusqu'à l'équilibrage dynamique final après usinage. Cette dernière opération est délicate et complexe. La méthodologie selon la revendication 1 consiste, à partir d'un vilebrequin brut de forge pré usiné à ses extrémités, à définir par calculateur les coordonnées des 2 points A et B matérialisant l'axe d'inertie dynamique en fonction du balourd mesuré sur la pièce en rotation.

On matérialise l'axe d'inertie par perçage de trous de centre aux extrémités (A, B) du vilebrequin et on procède à l'usinage des tourillons et manetons. La difficulté résulte du fait que la surépaisseur d'usinage ne sera jamais constante sur la périphérie des tourillons et manetons, de part des problèmes d'excentration dus au fait que les pièces n'ont pas une géométrie parfaite. Toute déformation, décalage des manetons, tourillons, si elle reste faible en dimension, induit un nouveau balourd qui doit être à nouveau corrigé par perçage sur la périphérie des contrepoids, de trous borgnes plus ou moins profonds en fonction des besoins.

Même si des tolérances de fabrication et d'équilibrage sont acceptées, la méthodologie actuelle est contraignante, peu pratique, nécessite 2 interventions de correction de balourd par le client lui-même : une en début de ligne d'usinage sur le vilebrequin brut, et une en fin de ligne, plus fine, après usinage complet.

La démarche du demandeur a donc été de réfléchir, à partir d'un objectif à atteindre pour le fabricant du vilebrequin, à savoir comment fournir des vilebrequins comportant une matérialisation de l'axe d'inertie par perçage de trous de centre à ses extrémités supprimant dans un premier temps les premières opérations sur la ligne d'usinage du client. Une contrainte dont il fallait tenir compte était que, si le calculateur détermine une excentration de l'axe d'inertie importante, l'usinage qui suit sera également excentré.

Différentes orientations de recherche existaient pour le demandeur, et ce pour améliorer le service client et limiter chez lui les temps et opérations complémentaires d'usinage des vilebrequins.

Une première possibilité était que le demandeur s'équipe lui-même des moyens de mesure des balourds, avec le pré usinage des parties d'extrémités du vilebrequin, de faire les corrections de balourdage dans la pièce brute, et le client travaillant en finition sur une pièce pré-balourdée. Cette solution reste lourde à gérer.

Une autre solution était d'appréhender le volume de la pièce à partir de relevés sur machine tri-dimensionnelle et de traiter les données pour définir son axe d'inertie - cependant le nombre (200) de cotes actuellement relevées, pour contrôle conformité / tolérances, conduit à des temps de mesures rédhibitoires quant à une application série et le faible nombre de points relevés ne permet pas une définition précise du volume.

A partir de l'ensemble de ces contraintes, le demandeur s'est orienté vers une solution totalement différente et qui permet de répondre aux différents problèmes posés, et en particulier à l'un des objectifs recherchés d'optimiser l'usinage chez le client en minimisant voire supprimant le débalourdage sur ses lignes d'usinage.

Selon une première caractéristique de l'invention, le procédé d'équilibrage de vilebrequins comprenant des parties usinées en extrémités d'axes A, B, des manetons, tourillons et contrepoids est remarquable en ce que :
- on procède à l'établissement, par voie numérique, à la conception d'un vilebrequin de référence du type à obtenir sur la base de données client.
- on procède à la fabrication d'un vilebrequin qui est ensuite analysé dans un système de stéréo vision par l'identification d'une multitude de points d'images dans l'espace de manière à reconstituer la surface réelle en trois dimensions limitant son volume, on en déduit son axe d'inertie.
- on compare ensuite, par numérisation, le vilebrequin de référence au vilebrequin fabriqué et visionné : vérification de sa conformité / tolérances dimensionnelles.
- on procède, par traitement numérique, à son usinage virtuel / axe d'inertie calculé précédemment.
- on procède ensuite au calcul du nouvel axe d'inertie / nouvelle répartition des masses résultant de l'usinage.
- on procède enfin, sur une machine, au dressage des extrémités du vilebrequin et perçage des trous de centre matérialisant l'axe d'inertie idéal.

Le procédé d'équilibrage des vilebrequins consiste ainsi à recréer, par stéréo vision, l'ensemble de la peau du vilebrequin fabriqué avec un nombre de points image suffisant, puis en comparaison avec le vilebrequin de référence pour ensuite déterminer les zones à enlever.

La solution ainsi apportée par l'invention permet d'éviter 2 opérations de débalourdage chez le client, l'ensemble du procédé étant mis en oeuvre en amont par le fabricant. Tous les usinages, y compris ceux qui ne sont pas symétriques par rapport aux axes, peuvent être pris en compte (trous d'huile de lubrification, clavetage, repère d'indexation moteur).

Dans la mise en oeuvre de l'invention, le vilebrequin tourne autour de l'axe d'inertie qui sera le sien après usinage. Cela peut entraîner des vibrations dues au balourd dans les opérations d'ébauche, mais les conséquences sont plus faibles que celles générées dans les opérations de finition préalables à l'équilibrage, selon la procédure actuelle de fabrication.

Selon l'invention, le contrôle à 100% du dimensionnel et de l'axe d'inertie fiabilise la conformité des vilebrequins aux souhaits du client.

On a ainsi représenté, figure 2, un vilebrequin en mettant en valeur l'ensemble des parties usinées (a), et l'ensemble des parties restant à l'état brut (b) : contrepoids et bras de liaison.

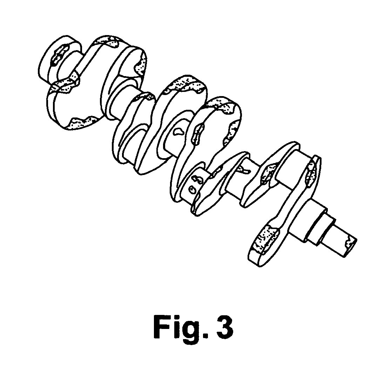

La figure 3 est une photographie illustrant la comparaison du modèle de référence et celui obtenu par acquisition stéréo vision, les parties grisées étant celles présentant des excès de matière par rapport au modèle de référence.

Les avantages ressortent bien de l'invention.

Le procédé, selon l'invention, requiert un nombre élevé de caméras pour prendre la multitude d'images de la pièce pour permettre une vision totale du volume, mais malgré cela le procédé reste rentable par rapport à la technique antérieure. Un avantage essentiel réside dans le fait que les opérations de débalourdage, initiées avant par le client, sont supprimées, et c'est le fabricant qui les prend en charge en optimisant l'équilibrage.

## Revendications

1. Procédé d'équilibrage de vilebrequins comprenant des parties usinées en extrémités d'axes A, B, des manetons, tourillons et conntrepoids du type mettant en oeuvre une opération de test de l'équilibrage en éventuel enlèvement de matière à des fins d'équilibrage avant les opérations de finition
- on procède à l'établissement, par voie numérique, à la conception d'un vilebrequin de référence du type à obtenir sur la base de données client,
**caractérisé en ce que** :
- on procède à la fabrication d'un vilebrequin qui est ensuite analysé dans un système de stéréo vision par l'identification d'une multitude de points d'images dans l'espace de manière à reconstituer la surface réelle en trois dimensions limitant son volume, on en déduit son axe d'inertie,
- on compare ensuite, par numérisation, le vilebrequin de référence au vilebrequin fabriqué et visionné : vérification de sa conformité / tolérances dimensionnelles,
- on procède, par traitement numérique, à son usinage virtuel / axe d'inertie calculé précédemment,
- on procède ensuite au calcul du nouvel axe d'inertie / nouvelle répartition des masses résultant de l'usinage,
- on procède enfin, sur une machine, au dressage des extrémités du vilebrequin et perçage des trous de centre matérialisant l'axe d'inertie idéal.

## Claims

1. Method for balancing crankshafts comprising parts machined at the ends of shafts A, B, crank pins, journals and counterweights of the type that uses a balancing test operation and possible removal of material for balancing purposes before finishing operations wherein:
- The design of a reference crankshaft of the type to be obtained based on the customer's data is digitally produced, **characterised in that**:
- A crankshaft is manufactured and then analysed in a stereovision system by identifying a multitude of pixels in three dimensions so as to reconstitute the real surface that bounds its volume three dimensionally and deduce its axis of inertia therefrom,
- The reference crankshaft is then compared to the manufactured and viewed crankshaft by digitisation: Verification of its conformity/dimensional tolerances,
- Virtual machining/previously computed axis of inertia is then performed/produced by digital processing,
- The new axis of inertia/new distribution of masses resulting from machining are then computed,
- Finally, the ends of the crankshaft are trued on a machine and centre holes that produce the ideal axis of inertia are drilled.

## Patentansprüche

1. Verfahren zum Auswuchten von Kurbelwellen bestehend aus an den Enden der Achsen A und B bearbeiteten Teilen, Hubzapfen, Wellenzapfen und Gegengewichten, bei dem zwecks Auswuchtung vor der Fertigbearbeitung eine Prüfung der Auswuchtung und eine eventuelle Spanabhebung durchgeführt wird, wobei:
- auf numerischem Wege eine Vergleichskurbelwelle nach Art derjenigen, die auf der Grundlage von Kundendaten zu erzielen ist, konzipiert wird:
**dadurch gekennzeichnet, dass**:
- eine Kurbelwelle hergestellt wird, die dann in einem Stereosichtsystem durch Identifizierung einer Vielzahl von Bildpunkten im Raum untersucht wird, um die das Volumen begrenzende reale Oberfläche in drei Dimensionen zu rekonstruieren, wovon die Trägheitsachse abgeleitet wird,
- anschließend durch Numerisierung die Vergleichskurbelwelle mit der hergestellten und gesichteten Kurbelwelle verglichen wird: Überprüfung der Übereinstimmung / Maßtoleranzen,
- die virtuelle spanende Bearbeitung / zuvor berechnete Trägheitsachse numerisch vorgenommen wird,
- dann die neue Trägheitsachse / neue Verteilung der aus der spanenden Bearbeitung resultierenden Massen berechnet wird,
- schließlich an einer Maschine die Enden der Kurbelwelle gerichtet und mittige Bohrungen als Konkretisierung der idealen Trägheitsachse gebohrt werden.
